# EUROPÄISCHE PATENTSCHRIFT

(11) **EP 0 680 691 B1**
(45) Veröffentlichungstag und Bekanntmachung des Hinweises auf die Patenterteilung: **26.08.1998**
(21) Anmeldenummer: 95106421.1
(22) Anmeldetag: 28.04.1995
(51) Int. Cl.: A01G 9/10

(54) **Pflanzenpalette**
Plant tray
Plateau pour plantes

(30) Priorität: 02.05.1994 DE 9407266 U
(43) Veröffentlichungstag der Anmeldung: 08.11.1995
(73) Patentinhaber: Gebr. Pöppelmann, Kunststoffwerk-Werkzeugbau, D-49393 Lohne (DE)
(72) Erfinder: Orschulik, Günther, D-49377 Vechta (DE)
(74) Vertreter: Busse & Busse Patentanwälte

(56) Entgegenhaltungen:
- DE-A- 4 236 736
- DE-U- 9 319 024
- DE-U- 9 407 266
- FR-A- 2 161 541
- FR-A- 2 354 700
- GB-A- 1 034 256
- US-A- 4 769 946

## Beschreibung

Pflanzenpaletten nach dem Oberbegriff des Anspruchs 1 werden insbesondere im Erwerbsgartenbau verwandt, wo sie jeweils eine Vielzahl von Pflanzennutzen je Palette bereitstellen, die, mit Erde oder sonstigem Substrat gefüllt, der Anzucht bzw. Aufzucht von vielen Pflanzen in einem Zuge dienen können. Vorzugsweise sind diese Pflanzenpaletten dünnwanding und damit leicht aus Kunststoffolie gezogen und sowohl mit Rücksicht auf den Tiefziehvorgang wie auch mit Rücksicht auf ein leichtes Befüllen und Entleeren mit konischen Wandungen der Pflanzennutzen ausgebildet, so daß sie zu Transport oder Lagerung raumsparend ineinander zu stapeln sind.

Es besteht aber auch ein Interesse, die Pflanzenpaletten nach einem Befüllen der Pflanzennutzen stapeln zu können, wobei allerdings dann die Böden der aufgelagerten Palette nicht in die Pflanzennutzen hineindrücken sollen. Dies ist insbesondere bei einer Arbeitsweise erforderlich, bei der die Paletten zunächst mit vorgeformten Substratballen bestückt und erst danach - unversehrt - an einen Gartenbaubetrieb zum Einbringen von Samen oder Stecklingen geliefert werden sollen.

In dieser Hinsicht sind bereits Pflanzenpaletten verwandt worden, bei denen die Pflanzennutzen in gegeneinander so versetzten Reihen angeordnet sind, daß die Paletten bei gegenseitigem Verdrehen um 180° in der Plattenebene nicht mehr ineinander zu stapeln sind, sondern sich aufeinander abstützen. Durch die besondere Aufteilung ergeben sich allerdings Verlustflächen im Randbereich der Paletten und damit eine schlechte Flächenausnutzung. Überdies ist die Drehung der Paletten sowohl bei manueller wie maschineller Handhabung umständlich und führt nur zu bedingt stabilen Stapelanordnungen.

DE-U-93 19 024 zeigt eine Pflanzenpalette mit Stützen an den Ecken, deren Aufteilung ein Handhaben wie oben beschrieben ermöglicht.

Aufgabe der Erfindung ist es, eine Pflanzenpalette zu schaffen, die einfach zu fertigen ist, eine gute Flächen -und Volumennutzung ermöglicht und bei einfacher und schneller Handhabung ein stabiles und lagegesichertes Übereinanderstapeln der Paletten im befüllten Zustand ermöglicht.

Die erfindungsgemäße Lösung nach dem Anspruch 1 sieht Riegelfortsätze bzw. Riegelaufnahmen einerseits an den obenliegenden Zwischenstreifen und andererseits an den unterliegenden Böden der Pflanzennutzen vor, über die die Pflanzenpalette mit der darunterliegenden bzw. darüberliegenden Pflanzenpalette dadurch in einen Riegeleingriff zu bringen ist, daß ein Horizontalversatz hergestellt wird, bei dem nicht mehr die Zwischenstreifen und die Böden übereinanderliegen, sondern bei dem sich Zwischenstreifen und Böden in vertikaler Richtung aufeinander abstützen und in dieser Stützlage durch den Regeleingriff gegen horizontales Verrutschen gesichert sind. Dies ermöglicht einen Transport von Pflanzenpaletten in einer Stapelstellung, die keine weiteren Lagesicherungen voraussetzt.

Insbesondere bei einer Pflanzenpalette mit raumökonomisch in einem Viereckverbund mit rechtwinklig zueinander verlaufenden geraden Reihen von Pflanzennutzen ergibt sich auch zwischen übereinanderliegenden Paletten ein Raster von gegenseitigen Auflagebereichen der Böden gegenüber den Zwischenstreifen, bei dem die Last der Pflanzennutzen auf gewölbeartig gehaltene Zwischenstreifen abgestützt wird, womit eine formstabile und hochbelastbare Abstützung erreicht wird.

Vorzugsweise sind die Riegelaufnahmen als konkave Ausformungen an den Unterseiten der Pflanzenböden ausgebildet, wobei sich mit einer dünnwandigen Formgebung der Pflanzenpalette an dem darüberliegenden Innenraum der Pflanzennutzen entsprechender Auflagerpunkte mit Abstand vom Boden ausbilden, auf den Substratballen mit einem für die Bewässerung und Belüftung vorteilhaften Abstand vom Boden aufgelagert werden können. Aufgrund dieser Zusatzfunktion der Riegelaufnahmen werden sie vorzugsweise durchgängig an den Böden der Pflanzennutzen vorgesehen, ggf. auch an solchen Böden wie auch an solchen Bodenbereichen, die als Riegelaufnahmen nicht in Betracht kommen.

Demgegenüber können die Riegelfortsätze in einer begrenzten, nicht durchgängigen Zahl und Anordnung vorgesehen werden, die lediglich einer ausreichenden Sicherung der Paletten im Stapel gegen horizontale Verschiebekräfte dient. Ein Verzicht auf eine nicht erforderliche Zahl von Riegelfortsätzen erleichtert die Handhabung und mindert Störanfälligkeiten.

Weitere Einzelheiten und Vorteile der Erfindung ergeben sich aus der nachfolgenden Beschreibung und der Zeichnung. In der Zeichnung zeigen:

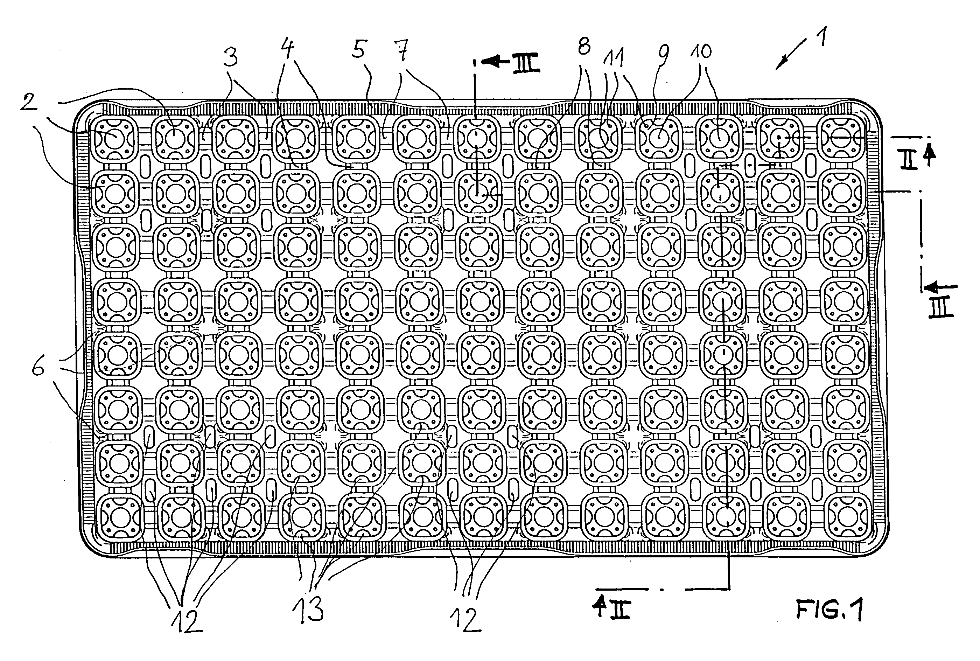

- Fig. 1: eine Draufsicht auf eine Pflanzenpalette,

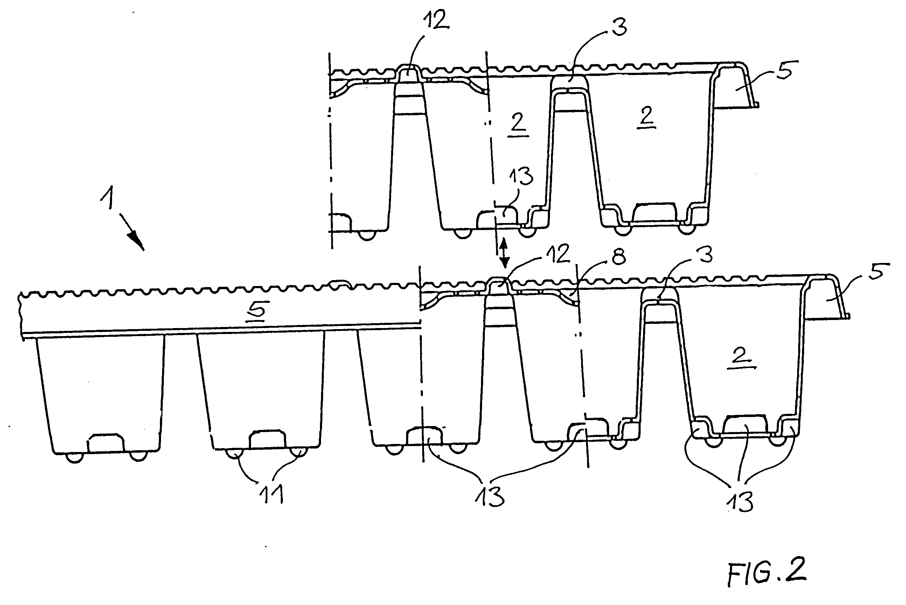

- Fig. 2: Schnitt nach Linie II-II in Fig. 1 in vergrößertem Maßstab zusammen mit einem Teil einer zweiten aufzustapelnden Palette und
- Fig. 3: Schnitt nach Linie III-III in entsprechend Fig. 2 vergrößertem Maßstab und mit einem Teil einer weiteren aufzustapelnden Palette.

Eine Pflanzenpalette 1 vereinigt als Ganzes eine Vielzahl topfförmiger Pflanzennutzen 2, die in flächiger Anordnung in Reihen und Spalten über Zwischenstreifen 3 bzw. 4 zu einer tablettartigen Einheit untereinander verbunden und durch einen umlaufenden Versteifungs- und Griffrand 5 umschlossen sind. Eine solche Pflanzenpalette, die im vorliegenden Beispiel 8 Längsreihen und 13 Querreihen von Pflanzennutzen 2 umfaßt, die untereinander in jeder der beiden Reihenrichtungen in einem vorgegebenen Rastermaß distanziert sind, bietet also eine Anzahl von 104 Pflanzennutzen, die vorteilhaft insbesondere im Erwerbsgartenbau für eine rationelle Anzucht und Aufzucht von Pflanzen zu verwenden ist.

Eine solche Pflanzenpalette ist in Kunststoff, insbesondere in einem gut wiederverwertbaren Kunststoff, dünnwandig auch in einer sehr komplexen Form ausführbar, wobei zur Herstellung vorwiegend ein Tiefziehen aus einer thermoplastischen Folie verwandt wird, auch wenn eine Spritzgußherstellung grundsätzlich in Betracht kommen kann. In jedem Fall liegt von der Formgebung und der Entformung des Kunststoffprodukts und in gleicher Weise von der Handhabung der Palette beim Befüllen und ggf. Entleeren der Pflanzennutzen eine Formgebung für die Nutzen mit stumpfkegeligen Wandungen nahe, so daß sich von daher die Möglichkeit eines engen Ineinanderstapelns ergibt. Zur Gewährleistung eines Stapelabstandes für ein einfaches maschinelles Entstapeln und zur Vermeidung von Klemmeingriffen zwischen ineinandergestapelten Paletten sind sogar an den Wandungen der Pflanzennutzen 2 teilweise Stapelschultern 6 ausgeformt.

Der Rand 5 erhebt sich ein wenig über ein oberes Niveau des Innenbereichs der Pflanzenpalette 1, bestimmt durch die Zwischenstreifen 3,4, die ihrerseits aber zwischen benachbarten Pflanzennutzen zu kurzen Rinnen 7 bzw. 8 abgesenkt sind. Diese Rinnen 7,8 sorgen einerseits aufgrund ihrer räumlichen Ausformung für eine Versteifung der Palette 1, schaffen aber auch Überlaufrinnen bei der Bewässerung, insbesondere bei einer Schwall- oder Tauchbewässerung, bei der die Pflanzennutzen oberseitig durch die Rinnen miteinander verbunden sind, während der Rand 5 einen oberseitigen Ablauf nach außen verhindert.

Zu einer einfachen Bewässerung einer solchen Pflanzenpalette weisen die einzelnen Pflanzennutzen 2, die unterseitig mit einem Boden 9 abschließen, jeweils eine Entwässerungsöffnung 10 auf, durch die das zugeführte Wasser schnell ablaufen kann, soweit es nicht in den Pflanzennutzen festgehalten wird. Ferner sind noppenförmige, aus den Pflanzenböden 9 nach unten ausgeformte Aufstellstützen 11 vorgesehen, die einen Abstand des Bodens 9 von einer jeweiligen Aufstellfläche und damit einen Freiraum für einen Zu- oder Ablauf des Wassers durch die Entwässerungsöffnungen 10 gewährleisten.

Bei der Handhabung der Paletten besteht ein Interesse daran, diese aufeinanderstapeln zu können, ohne daß die Wandungen der Pflanzennutzen sich ineinanderschieben und dabei die Befüllung der Pflanzennutzen zerquetschen. In besonders großem Maße tritt dieses Bedürfnis, verbunden mit einer zuverlässigen, einfach herzustellenden und lagegesicherten Stapelung auf, wenn derartige Pflanzenpaletten vor der Verwendung im Erwerbsgartenbau zunächst eine Bestückung mit Pflanzenerde oder mit besonders vorteilhaften vorgeformten Substratballen erfahren sollen und hinterher weiter zu transportieren sind. Zu einem einfachen, schnellen, maschinengerechten Aufeinanderstapeln der Pflanzenpaletten ohne ein Erfordernis besonderer Hilfs- oder Distanziermittel ist vorgesehen, daß die Pflanzenpaletten mit einem leichten horizontalen Versatz gegeneinander gestapelt werden, so daß der Boden 9 der Pflanzennutzen 2 einer jeweils oberen Palette auf den Zwischenstreifen 3 einer darunterliegenden Palette 1 aufsteht. Dies ergibt eine formstabile Abstützung des Gewichts der Paletten von oben nach unten, auch bei einer Vielzahl übereinandergestapelter Paletten. Dabei wird vorzugsweise vorgesehen, daß der horizontale Versatz übereinanderliegender Paletten in der Stapelreihenfolge jeweils wechselnd erfolgt, so daß die Paletten im Stapel wechselnd übereinanderliegen. Der Rand 5 ist dabei so schmal und so gelagert, daß er unter dem freien Bereich zwischen zwei Nutzen 2 liegt.

Diese Stapellage verlangt allerdings eine hinreichende Lagesicherung, zumal die Reibung von Kunststoffflächen untereinander gering ist und die Aufstellstützen 11 niedrig gehalten sind. Zur Lagesicherung sind Riegelfortsätze 12 und Riegelaufnahmen 13 vorgesehen, die in vertikaler, jeweils nach oben gerichteter Ausformung der dünnwandigen Paletten eine Lagesicherung gegen horizontales Verschieben bewirken.

Die Riegelvorsprünge sind durch kurze sickenförmige hochstehende Ausformungen an den Zwischenstreifen, und zwar im Kreuzungsbereich der Zwischenstreifen jeweils zwischen einem Viereck von Pflanzennutzen, gebildet. Sie haben die Grundform eines Ovals mit einer Längserstreckung, die über den bodenseitigen Abstand zweier benachbarter Pflanzennutzen 2 hinausgeht. Die Riegelfortsätze 12 sind nicht durchgängig, sondern nur bereichsweise in der Nähe der vier Ecken der Paletten-Grundform und in zwei mittleren Bereichen jeweils in Randnähe verteilt.

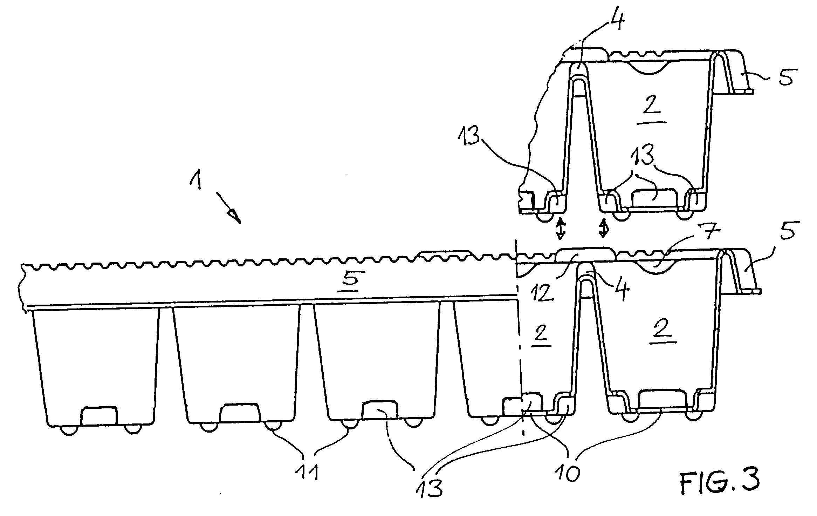

Diese Riegelfortsätze greifen in Riegelaufnahmen 13 einer aufgestapelten Pflanzenpalette ein, und zwar, wie insbesondere anhand von Fig. 3 zu erkennen ist, jeweils in zwei Riegelaufnahmen, die jeweils in einer von zwei benachbarten Pflanzennutzen in deren Boden ausgeformt ist, wobei ein mittlerer Bereich des Riegelfortsatzes frei zwischen den Pflanzennutzen verläuft. Damit wird erreicht, daß die Riegelaufnahmen keine störenden Vorsprünge und keine Raumeinbußen in den Pflanzennutzen schaffen. Es ist sogar ein zusätzlicher Vorteil dieser Riegelaufnahmen dadurch erzielt, daß diese innenseitig Auflagerbereiche im Abstand vom Boden der Pflanzennutzen schaffen, auf denen vorgeformte Substrate bzw. Substratballen mit guter Belüftung und Entwässerung nach unten hin aufstehen. Dementsprechend sind die Riegelaufnahmen 13 nicht nur parallel zu den Riegelfortsätzen an allen Pflanzennutzen 2 ausgebildet, was in jedem Fall schon einen Vorteil hinsichtlich der Freiheit der Stapelanordnung über das Mindest-Versatzmaß hinaus schafft - sondern sie sind auch noch in Querrichtung ausgeformt, wo sie allenfalls bei gekreuzt übereinandergestellten Paletten eine Riegelfunktion ausüben können. Die durchgängige Anordnung von vier Riegelaufnahmen an jedem der Pflanzennutzen dient in erster Linie der Distanzierung von Substratballen gegenüber dem jeweiligen Boden 9.

Im Ergebnis zeigt sich, daß Paletten dieser Art sowohl ineinander zu stapeln sind wie auch ohne besonderen Handhabungsaufwand übereinander gestapelt werden können, wobei die Abstützung der Paletten aufeinander im Stapel eine sehr gute Lastaufnahmen und Lastübertragung nach unten gewährleistet. Vorzugsweise werden die Paletten mit der kleinstmöglichen Verschiebung gegeneinander versetzt, die sich im vorliegenden Fall in Größe eines halben Rastermaßes nach dem Abstandsraster der Längsseiten der Palette ergibt. Dazu sind die Verriegelungsfortsätze 12 jeweils in Richtung der Längsseiten der Palette um ein halbes Rastermaß gegenüber den Verriegelungsaufnahmen 13 versetzt und vorteilhaft quer zu den Längsseiten ausgerichtet. Daraus resultiert die größtmögliche Flächenüberdeckung übereinanderliegender Paletten mit Vorteil für eine stabile Auflagerung. Wahlweise können die Paletten aber auch mit größerem Versatz in jeder der Kantenrichtung übereinandergestapelt werden.

## Patentansprüche

1. Pflanzenpalette in einer mit weiteren Paletten ineinandersetzbaren Stapelform mit Pflanzennutzen, die jeweils mit stumpfkegeliger Wandung von einer oberen Palettenebene zu einem Boden verlaufen und in rasterförmiger Anordnung miteinander in einer Palettenebene über Zwischenstreifen verbunden sind, dadurch gekennzeichnet, daß zumindest in einem Teil der Böden (9) der Pflanzennutzen (2) einerseits und zumindest in einem Teil der Zwischenstreifen (3,4) andererseits Riegelfortsätze (12) bzw. komplementäre Riegelaufnahmen (13) ausgebildet sind, die bei einem horizontalen Versatz übereinanderliegenden Pflanzenpaletten (1) gegeneinander einen horizontalen Verriegelungseingriff schaffen.

2. Pflanzenpalette nach Anspruch 1, dadurch gekennzeichnet, daß die Pflanzennutzen (2) in einem Viereckverbund mit rechtwinklig zueinander verlaufenden geraden Reihen angeordnet sind.

3. Pflanzenpalette nach Anspruch 2, dadurch gekennzeichnet, daß die Riegelaufnahmen (13) in den Pflanzenböden (9) ausgebildet sind, wobei diese auf der Innenseite der Pflanzennutzen (2) einen Auflagerbereich für Substratballen ausbilden.

4. Pflanzenpalette nach Anspruch 2 oder 3, dadurch gekennzeichnet, daß die Riegelfortsätze (12) jeweils in Zwischenstreifen (3,4) zwischen einem Viereck von Pflanzennutzen (2) angeordnet sind.

5. Pflanzenpalette nach Anspruch 4, dadurch gekennzeichnet, daß die Riegelfortsätze (12) als langgestreckte in der Länge über den Abstand zweier benachbarter Pflanzennutzen (2) hinausgehende Erhebungen ausgebildet sind.

6. Pflanzenpalette nach Anspruch 5 in Verbindung mit Anspruch 3, dadurch gekennzeichnet, daß den Riegelfortsätzen (12) jeweils Paare von Riegelaufnahmen (13) gegenüberstehen, die an benachbarten Pflanzennutzen (2) einander gegenüberstehend zur Aufnahme jeweils eines Endbereichs eines Riegelfortsatzes (12) ausgebildet sind.

7. Pflanzenpalette nach Anspruch 6, dadurch gekennzeichnet, daß die Riegelaufnahmen (13) an allen Böden der Pflanzennutzen (2) ausgebildet sind.

8. Pflanzenpalette nach einem der Ansprüche 4 bis 7, dadurch gekennzeichnet, daß die Riegelfortsätze (12) nur an einem Teil der Zwischenstreifen (3,4) angeordnet sind.

9. Pflanzenpalette nach Anspruch 8, dadurch gekennzeichnet, daß die Riegelfortsätze (12) parallel zueinander ausgerichtet sind.

10. Pflanzenpalette nach Anspruch 9 mit rechteckigem Umriß, dadurch gekennzeichnet, daß die Riegelfortsätze (12) parallel zu kürzeren Seiten eines Rechteckrandes (5) ausgerichtet sind.

11. Pflanzenpalette nach einem der Ansprüche 4 bis 10 mit einem zumindest bereichsweise über die Zwischenstreifen (3,4) hinausragenden Rand (5), dadurch gekennzeichnet, daß der Rand oberseitig eine geringere Breite hat als der Abstand der Böden benachbarter Pflanzennutzen (2) voneinander.

12. Pflanzenpalette nach einem der Ansprüche 1 bis 11, dadurch gekennzeichnet, daß die Zwischenstreifen (3,4) zwischen den Pflanzennutzen (2) zumindest teilweise zu Querrinnen (7,8) geformt sind.

13. Pflanzenpalette nach einem der Ansprüche 1 bis 12, dadurch gekennzeichnet, daß die Böden (9) der Pflanzennutzen (2) unterseitig Entwässerungsöffnungen (10) und Aufstellstützen (11) aufweisen.

14. Pflanzenpalette nach einem der Ansprüche 1 bis 13, dadurch gekennzeichnet, daß sie als dünnwandiges Kunststoff-Tiefziehteil ausgebildet ist.

15. Pflanzenpalette nach Anspruch 14, dadurch gekennzeichnet, daß sie aus einem wiederverwertbaren Kunststoff besteht.

## Claims

1. A plant pallet in a stacking form adapted to be fitted into other pallets and with plant recesses each of which extends with frustoconical walls from an upper pallet plane to a bottom, being connected by intermediate strips to one another in a grid-like arrangement in a pallet plane, characterised in that at least in a part of the bottoms (9) of the plant recesses (2) on the one hand and at least in a part of the intermediate strips (3, 4) on the other there are locking projections (12) or complementary locking recesses (13) which, in the event of a horizontal offset of superposed plant pallets (1), provide a horizontal interlocking engagement in respect of one another.

2. A plant pallet according to claim 1, characterised in that the plant recesses (2) are disposed in a rectangular composite in straight rows which extend at right-angles to one another.

3. A plant pallet according to claim 2, characterised in that the locking recesses (13) are constructed in the plant bottoms (9), these latter forming on the inside of the plant recesses (2) a supporting area for balls of substrate.

4. A plant pallet according to claim 2 or 3, characterised in that the locking projections (12) are respectively disposed in intermediate strips (3, 4) between a rectangle of plant recesses (2).

5. A plant pallet according to claim 4, characterised in that the locking projections (12) are constructed as elongated raised portions which in their length extend beyond the gap between two adjacent plant recesses (2).

6. A plant pallet according to claim 5 in conjunction with claim 3, characterised in that opposite the locking projections (12) are respective pairs of locking recesses (13) which, opposite one another on adjacent plant recesses (2), are constructed to accommodate in each case an end portion of a locking projection (12).

7. A plant pallet according to claim 6, characterised in that the locking recesses (13) are constructed on all bottoms of the plant recesses (2).

8. A plant pallet according to one of claims 4 to 7, characterised in that the locking projections (12) are only disposed on a part of the intermediate strips (3, 4).

9. A plant pallet according to claim 8, characterised in that the locking projections (12) are orientated parallel with one another.

10. A plant pallet according to claim 9 with a rectangular contour, characterised in that the locking projections (12) are orientated parallel with the shorter sides of a rectangular rim (5).

11. A plant pallet according to one of claims 4 to 10 with a rim (5) which projects over at least portions of the intermediate strips (3, 4), characterised in that the rim has a lesser width at the top than the distance between the bottoms of adjacent plant recesses (2).

12. A plant pallet according to one of claims 1 to 11, characterised in that the intermediate strips (3, 4) are, between the plant recesses (2), formed at least partially into transverse channels (7, 8).

13. A plant pallet according to one of claims 1 to 12, characterised in that the bottoms (9) of the plant recesses (2) have on their under side drain orifices (10) and supporting feet (11).

14. A plant pallet according to one of claims 1 to 13, characterised in that it is constructed as a thin-walled deep drawn synthetic plastics part.

15. A plant pallet according to claim 14, characterised in that it consists of a synthetic plastics material which can be recycled.

## Revendications

1. Palette à plantes sous forme empilable qui peut s'encastrer sur d'autre palettes, avec des volumes de plantation, qui s'étendent respectivement avec une paroi tronconique d'un plan supérieur de la palette à un fond et soit reliés les uns aux autres en réseau dans un plan de la palette par l'entremise de bandes intermédiaires, caractérisée en ce que sont formés au moins dans une partie du fond (9) des volumes de plantation (2), d'une part, et au moins dans une partie des bandes intermédiaires (3, 4), d'autre part, respectivement, des prolongements de verrouillage (12) et des logements de verrouillage complémentaires (13) qui forment une prise de verrouillage horizontale dans le cas d'un décalage horizontal de palettes superposées l'une par rapport à l'autre.

2. Palette à plantes selon la revendication 1, caractérisée en ce que les volumes de plantation (2) sont agencés en combinaison carrée avec des rangées droites s'étendant mutuellement à angles droits.

3. Palette à plantes selon la revendication 2, caractérisée en ce que les logements de verrouillage (13) sont formés dans les fonds (9) des volumes de plantation, ces logements formant sur la face intérieure des volumes de plantation (2) une zone d'appui pour des balles de substrat.

4. Palette à plantes selon la revendication 2 ou 3, caractérisée en ce que les prolongements de verrouillage (12) sont agencés respectivement dans les bandes intermédiaires (3, 4) entre un carré de volumes de plantation (2).

5. Palette à plantes selon la revendication 4, caractérisée en ce que les prolongements de verrouillage (12) se présentent sous la forme de rehaussements oblongs qui font saillie de l'espacement entre deux volumes de plantation (2) voisins.

6. Palette à plantes selon la revendication 5 en liaison avec la revendication 3, caractérisée en ce qu'en regard des prolongements de verrouillage (12) se trouvent respectivement des paires de logements de verrouillage (13) qui sont formées en regard l'une de l'autre sur des volumes de plantation (2) voisins pour recevoir respectivement une zone terminale d'un prolongement de verrouillage (12).

7. Palette à plantes selon la revendication 6, caractérisée en ce que les logements de verrouillage (13) sont formés sur tous les fonds des volumes de plantation (2).

8. Palette à plantes selon l'une quelconque des revendications 4 à 7, caractérisée en ce que les prolongements de verrouillage (12) ne sont agencés que sur une partie des bandes intermédiaires (3, 4).

9. Palette à plantes selon la revendication 8, caractérisée en ce que les prolongements de verrouillage (12) sont alignés parallèlement l'un à l'autre.

10. Palette à plantes selon la revendication 9 avec un contour rectangulaire, caractérisée en ce que les prolongements de verrouillage (12) sont alignés parallèlement aux côtés courts d'un bord rectangulaire (5).

11. Palette à plantes selon l'une quelconque des revendications 4 à 10 avec un rebord (5) s'étendant au moins par endroits au-dessus des bandes intermédiaires (3, 4), caractérisée en ce que le rebord a, sur sa partie supérieure, une largeur plus faible que l'espacement des fonds de volumes de plantation (2) voisins.

12. Palette à plantes selon l'une quelconque des revendications 1 à 11, caractérisée en ce que les bandes intermédiaires (3, 4) entre les volumes de plantation (2) sont conformées au moins partiellement en rigoles transversales (7, 8).

13. Palette à plantes selon l'une quelconque des revendications 1 à 12, caractérisée en ce que les fonds (9) des volumes de plantation (2) présentent, dans leur face inférieure, des ouvertures de drainage (10) et des appuis de montage (11).

14. Palette à plantes selon l'une quelconque des revendications 1 à 13, caractérisée en ce qu'elle se présente sous la forme d'une pièce profondément emboutie de matière plastique à paroi mince.

15. Palette à plantes selon la revendication 14, caractérisée en ce qu'elle est constituée de matière plastique recyclable.
